# FASCICULE DE BREVET EUROPEEN

(11) **EP 0 425 422 B1**
(45) Date de publication et mention de la délivrance du brevet: **21.12.1994**
(21) Numéro de dépôt: 90500092.3
(22) Date de dépôt: 25.09.1990
(51) Int. Cl.: B65G 47/248, B65G 47/14

(54) **Dispositif et procédé de positionnement automatique de récipients**
Vorrichtung und Verfahren zum automatischen Positionieren von Behältern
Device for and method of automatic positioning receptacles

(30) Priorité: 27.09.1989 FR 8913046
(43) Date de publication de la demande: 02.05.1991
(73) Titulaire: Marti Sala, Jaime, E-08017 Barcelona (ES)
(72) Inventeur: Marti Sala, Jaime, E-08017 Barcelona (ES)
(74) Mandataire: Manresa Val, Manuel

(56) Documents cités:
- FR-A- 2 543 926
- US-A- 3 295 659
- US-A- 4 463 846

## Description

L'invention se rapporte aux dispositifs et aux procédés de positionnement automatique de récipients de forme aplatie, conçus pour alimenter, en continu, un poste de travail tel une unité d'impression, du genre comportant essentiellement un disque rotatif pourvu d'une pluralité d'éléments interchangeables aptes à recevoir des récipients de dimensions bien determinées et possèdant des deux côtés des feuillures aptes à retenir le goulot des récipients: un plan fixe de soutien, réglable en position par rapport au disque rotatif, pourvu d'une ouverture apte à laisser passer les récipients; une goulotte de récupération des récipients tombant par gravité au travers de ladite ouverture, le fond en premier, et de transfert desdits récipients vers un transporteur à bande alimentant le poste de travail.

Les dispositifs et les procédés connus du genre en question sont des types décrits dans les brevets:
- US-A-3 295 659 (AIDLIN) qui se rapporte à un redresseur-positionneur de récipients comportant, en particulier, un disque rotatif pourvu d'ouvertures radiales aptes à recevoir lesdits récipients et une goulotte de chute, unique;
- Fr-A-2 543 926 (MARTI) qui se rapporte également à un redresseur- positionneur de récipients comportant, en particulier, une pluralité d'éléments interchangeables aptes à recevoir lesdits récipients et une pluralité de goulottes de chute, également interchangeables, associées auxdits éléments. Ces divers dispositifs on été conçus pour alimenter des chaînes d'embouteillage avec des récipients positionnés verticalement et en ligne.

Ils ne sont pas adaptés à l'alimentation en continu d'un poste de travail avec des récipients, de forme aplatie, positionnés couchés dans un sens bien déterminé.

La recherche d'une solution à ce problème, a consisté à utiliser une première étape connue, bien maîtrisée, en combinant les techniques de récuperation AIDLIN et MARTI mettant en oeuvre un disque rotatif pourvu d'une pluralité de cavités interchangeables, un plan de soutien réglable en position par rapport ou disque et pourvu d'une ouverture de passage et une goulotte de récupération également interchangeable.

Il a fallu ensuite concevoir d'une part des cavités aptes à recevoir les récipients sur chant et d'autre part une goulotte apte à les transférér dans la même position vers un ensemble à concevoir également, apte à fournir en continu des récipients couchés dans un sens bien déterminé, destinés par exemple à des unités d'impression.

L'invention met donc en oeuvre un dispositif automatique qui comporte:
- des cavités des éléments interchangeables, apte à recevoir les récipients, et une goulotte de récuperation et de transfert, apte à guider lesdits récipients vers un transporteur à bande dont les formes et les dimensions permettent la maintien et le guidage des récipients couchés sur le chant;
- un transporteur à bande, de reprise des récipients en sortie de goulotte de guidage, possèdant, dans une première partie, des moyens permettant le maintien et le déplacement desdits récipients sur chant, dans une position légèrement inclinée, et la lecture de repères significatifs prémarqués sur la surface de chaque récipient , et, dans une deuxième partie, des moyens permettant le basculement desdits récipients sur l'une ou l'autre de leurs grandes faces, autrement-dit couchés à plat, en fonction de l'indication fournie par le moyen de lecture des repères prémarqués.

L'invention met également en oeuvre, d'une manière plus générale, un procédé de positionnement automatique de récipients de forme aplatie qui consiste:
a) à recupérer, couchés sur le chant, les récipients initialement disposés en vrac;
b) à les transférer, toujours sur le chant, le fond en premier, les uns à la suite des autres, en continu, vers un niveau de reprise inférieur;
c) à les guider, toujours sur chant, en les inclinant légèrement;
d) à lire des repères significatifs prémarqués sur la surface de chaque récipient;
e) à les basculer sur l'une ou l'autre de leurs grandes faces, autrement dit couchés à plat, en fonction de l'indication fournie par la lecture précédente;
f) à les transférér, en continu, couchés à plat, vers un poste de travail tel une unité d'impression.

Grâce aux solutions retenues:
- les techniques et les performances des positionneurs connus ont pu être reconduites moyennant certaines adaptations;
- l'ensemble de positionnement des récipients dans un sens bien déterminé a été conçu et réalisé en parfaite compatibilité avec les performances et caractéristiques desdits positionneurs et de très grande fiabilité (simplicité de la conception).

Les caractéristiques et les avantages de l'invention vont apparaître plus clairement à la lecture de la description détaillée qui suit d'un mode de réalisation préféré de l'invention aux dessins annexés.
Sur ces dessins:

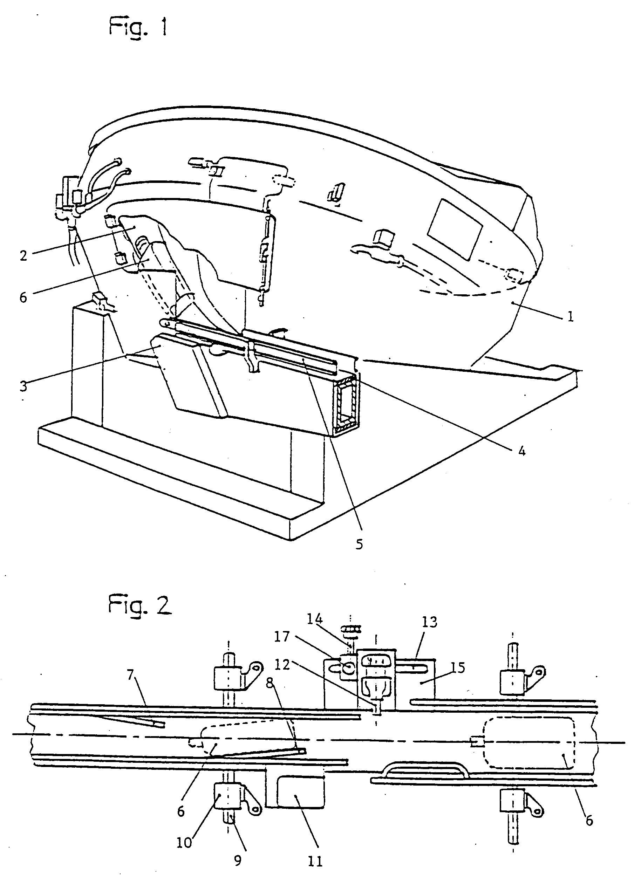

- la figure 1 est une vue d'ensemble en perspective du dispositif;
- la figure 2 est une vue de dessus du transporteur à bande;

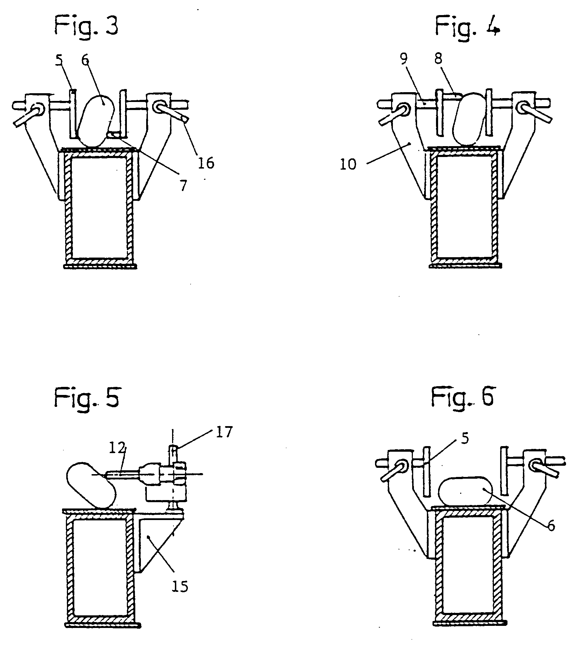

- les figures 3 et 4 sont des vues de profil simplifiées en coupe du transporteur montrant l'action des barres d'inclination sur les récipients;
- la figure 5 est une vue de profil simplifiée en coupe du transporteur montrant l'action du pousseur sur les récipients;
- la figure 6 est une vue de profil simplifiée en coupe du transporteur montrant un récipient basculé.

Le dispositif représenté aux figures comporte un positionneur (1), modifié, possèdant en particulier, non entièrement représentés, un disque rotatif pourvu d'une pluralité d'éléments interchangeables aptes à recevoir des récipients (6), un plan fixe de soutien pourvu d'une ouverture apte à laisser passer lesdits récipients, une goulotte (2), de récupération et de transfert des récipients. Les cavités des éléments du disque et la goulotte de guidage (2), ont des formes et des dimensions permettant le maintien et le guidage des récipients couchés sur le chant et en particulier les largeurs des cavités et des parois de la goulotte ont des dimensions comprises entre les deux dimensions hors-tout de la section transversale de chaque type de récipient utilisé. En outre, la goulotte de guidage possède un fond, sur lequel s'appuie le chant des récipients, de forme courbe, reliant progressivement l'ouverture du plan fixe du positionneur (1), au transporteur de bande (4).

Ledit transporteur de bande de reprise des récipients (6), en sortie de goulotte (2), comporte dans une première partie, des moyens permettant le maintien et le déplacement desdits récipients sur chant, dans une position légèrement inclinée, et la lecture de repères significatifs prémarqués sur la surface du récipient, et, dans une deuxième partie, des moyens permettant le basculement desdits récipients sur l'une ou l'autre de leurs grandes faces en fonction de l'indication fournie par ledit moyen de lecture.

Ces divers moyens sont:
- un lecteur (11), des repères du type capteur photo-éléctrique on photo-chromique;
- deux parois latérales opposées (5), appartenant au transporteur (4), dont la distance est reglée comprise entre les deux dimensions hors-tout de la section transversale de chaque type de récipient utilisé, associées à une barre d'inclination basse (7), puis une haute (8), solidaires desdites parois, aptes à incliner légèrement les récipients dans un sens bien déterminé, en appui sur lesdites parois;
- deux autres parois latérales opposées (5), situées en aval des deux premières, appartenant également au transporteur (4), dont la distance est reglée supérieure à la plus grande dimension hors-tout de la section transversale de chaque type de récipient utilisé, associées a un poussoir (12), actionné par le lecteur (11), en fonction du sens de basculement souhaité pour le récipient concerné, à savoir:

a) poussoir (12), inactif: le récipient bascule par gravité dans le sens de l'inclinaison prédeterminé dans la première partie du transporteur;
b) poussoir (12), actif: le récipient bascule, sous l'action du poussoir (par exemple à commande pnéumatique), dans le sens opposé au précédent.

La bande transporteuse comporte également:
- le support (10), des parois (5), par l'intermèdiaire de la tige (9);
- trois tiges (13), (14) et (17), permettant les divers réglages de la position du poussoir (12);
- le support (15), de l'ensemble poussoir;
- le bras de serrage (16), de la tige (9), dans la position souhaitée;
- son chassis (3).

Les barres d'inclinaison (7) et (8), outre la fonction première déjà exposée, possèdent également la fonction de maintenir les repères prémarqués à une certaine distance du lecteur correspondant.

## Revendications

1. Dispositif de positionnement automatique de récipients de forme aplatie, conçu pour alimenter, en continu, un poste de travail tel une unité d'impression, du genre comportant essentiellement un disque rotatif pourvu d'une pluralité d'éléments interchangeables aptes à recevoir des récipients (6) de dimensions bien déterminées et possèdant des deux côtés des feuillures aptes à retenir le goulot des récipients; un plan fixe de soutien, réglable en position par rapport au disque rotatif, pourvu d'une ouverture apte à laisser passer les récipients (6); une goulotte de récupération des récipients tombant par gravité au travers de ladite ouverture, le fond en premier, et de transfert (2) desdits récipients vers un transporteur à bande (4) alimentant la poste de travail;
caractérisé en ce que les cavités des éléments interchangeables, aptes à recevoir les récipients (6), et la goulotte de récuperation et de transfert (2), apte à guider lesdits récipients vers le transporteur à bande (4), ont des formes et des dimensions permettant le maintien et le guidage des récipients couchés sur le chant;
et en ce que le transporteur à bande (4), de reprise des récipients (6), en sortie de goulotte de guidage (2), comporte, dans une première partie des moyens permettant le maintien et le déplacement desdits récipients sur chant, dans une position légèrement inclinée, et la lecture de repères significatifs prémarqués sur la surface de chaque récipient, et, dans une deuxième partie, des moyens permettant le basculement desdits récipients sur l'une ou l'autre de leurs grandes faces, autrement-dit couchés à plat, en fonction de l'indication fournie par le moyen de lecture des repères prémarqués.

2. Dispositif, selon la revendications 1, caractérisé en ce que le maintien et le guidage des récipients couchés sur le chant, est réalisé au moyen des cavités des éléments interchangeables et des parois des goulottes qui possèdent des largeurs de dimensions comprises entre les deux dimensions hors-tout de la section transversale de chaque type de récipient utilisé.

3. Dispositif, selon la revendication 1, caractérisé en ce que le transfert des récipients couchés sur le chant vers le transporteur à bande (4), est réalisé au moyen de la goulotte de guidage qui possède un fond, sur lequel s'appuie le chant des récipients, de forme courbe, reliant progressivement l'ouverture du plan fixe du positionneur (1), audit transporteur à bande.

4. Dispositif, selon la revendication 1, caractérisé en ce que le moyen de lecture (11), des repères prémarqués sur les récipients est du type capteur photo-éléctrique ou photo-chromique.

5. Dispositif, selon la revendication 1, caractérisé en ce que les moyens, situés dans la première partie du transporteur à bande, permettant le maintien et le déplacement des récipients couchés sur le chant, dans une position légèrement inclinée, sont constitués par deux parois latérales opposées (5), appartenant audit transporteur, dont la distance est réglée comprise entre les deux dimensions hors-tout de la section transversale de chaque type de récipient utilisé, et par une barre d'inclinaison basse (7), puis une barre d'inclinaison haute (8), solidaires respectivement des parois latérales opposées du transporteur à bande, aptes à incliner légèrement les récipients dans un sens bien déterminé, en appui sur lesdits parois latérales.

6. Dispositif, selon la revendication 1, caractérisé en ce que les moyens situés dans la deuxième partie du transporteur à bande, permettant le basculement des récipients sur l'une ou l'autre de leurs grandes faces en fonction de l'indication fournie par le moyen de lecture (11), des repères prémarqués, sont constitués par deux parois latérales opposées (5), appartenant au transporteur à bande, dont la distance est réglée supérieure à la plus grande dimension hors-tout de la section tranversale de chaque type de récipient utilisé, et par un poussoir (12), actionné par le moyen de lecture des repères prémarqués en fonction du sens du basculement souhaité pour le récipient concerné, à savoir:
a) poussoir (12), inactif: le récipient bascule par gravité dans le sens de l'inclination prédeterminé dans la première partie du transporteur à bande;
b) poussoir (12), actif: le récipien bascule, sous l'action du poussoir, dans le sens opposé au précédent.

7. Procédé de positionnemnt automatique de récipients de forme aplatie, caractérisé en ce qu'il consiste:
a) à récupérer, couchés sur le chant, les récipients initialement disposés en vrac;
b) à les transférer, toujours sur chant, le fond en premier, les uns à la suite des autres, en continu, vers un niveau de reprise inférieur;
c) à les guider, toujours sur chant, en les inclinant légèrement;
d) à lire des repères significatifs prémarqués sur la surface de chaque récipient;
e) à les basculer sur l'une ou l'autre de leurs grandes faces, autrement-dit couchés à plat, en fonction de l'indication fournie par la lecture précédente;
f) à les transférer, en continu, couchés à plat, vers un poste de travail tel une unité d'impression.

## Claims

1. Device for automatically positioning flat containers, intended to continuously feeding a work station such a printing unit, of the type essentially comprising a rotatable disc provided with a plurality of exchangeable elements suitable for receiving containers (6) of a well determined dimension and having at two marginal edges a seat for retaining the neck of the containers; a stationary supporting plane adjustable in position with regard to the rotatable disc, provided with an opening suitable for the passage of the containers (6); one chute (2), for receiving the containers falling by gravity through said opening with its bottom first, and for transferring said containers towards a conveyor belt (4) which feeds the work station, characterized in that the recesses of the exchangeable elements fit for receiving the containers (6) and the chute (2) for receiving and transferring them, prepared to guide said containers towards the conveyor belt (4) have a shape and dimension allowing to maintain and guide the containers lying on their edge;
and in that the conveyor belt (4) which receives the containers (6) at the exit of the guiding chute (2) comprises at a first section means allowing the maintenance and the conveyance of said containers lying on their edge in a slightly tilted position and for detecting some significant marks defined on the surface of each container, and at a second section means are provided for tilting said containers selectively onto one or another of their wider sides, i.e. lying on one of their flat sides, depending on the indication provided by the means for detecting said pre-defined marks.

2. Device, according to claim 1 characterized in that the maintenance and guidance of the containers lying on their edge is performed by means of recesses of the exchangeable elements and walls of the chute which have a width comprised between the two greatest and smallest dimension of the transverse section of each kind of containers handled.

3. Device according to claim 1, characterized in that the transference of the containers lying supported on their edge towards the conveyor belt (4) is performed by means of the guiding chute which has a bottom onto which is supported the edge of the containers which has a curved profile and which gradually connects the opening of the fixed plane of the positioning device (1) to said conveyor belt.

4. Device, according to claim 1, characterized in that the means (11) for reading the marks predefined on the containers is of the photoelectric or photocromic detector type.

5. Device, according to claim 1 characterized in that the means located at said first section allowing the maintenance and conveyance of containers lying on their edge in a slightly tilted position towards one side are constituted by two opposite sidewalls (5) pertaining to said conveyor with a distance therebetween which is adjusted so that it is comprised between the two greatest and smallest dimensions of the transversal section of each kind of containers handled, and by a lower tilting bar (7) and a second upper tilting bar (8) both of them integral to opposite lateral walls of the conveyor blet, for slightly tilting the containers in a well predetermined direction supported on said side walls.

6. Device, according to claim 1, characterized in that the means located at the second section of the conveyor belt allowing the tilting of the containers onto one or another of their wider sides depending on the indication provided by the detector means (11) when reading the predefined marks are constituted by two opposite side walls (5) pertaining to the conveyor spaced therebetween a distance adjusted in order to be greater that the greatest dimension of the transversal section of each kind of container handled and by a pusher (12) prepared to be operated by the detector means reading the marks predefined depending on the direction of tilting wished for a determined container,i.e:
a) pusher (12) inactive: the container tilts by gravity in the direction of the preselected inclined position along the first section of the conveyor belt;
b) pusher (12) active: the container tilts under the action of the pusher towards the opposite direction to the previous one.

7. Method for automatically positioning of flat containers characterized in that it consists in:
a) receiving the container initially at a random position lying on their narrow side or edge;
b) transporting said containers always lying on their edge, its bottom first continuously one behind another towards a lower receiving level;
c) guiding said containers maintaining them lying on their edge, tilting them slightly;
d) detecting some significant pertinent marks pre-marked on the surface of each container;
e) tilting said container onto one or another of its great sides, i.e lying on one of its flat sides, depending on the indication provided by the previous detector means;
f) continuously transferring said containers resting supported on one flat side, towards a work station such as a printing unit.

## Patentansprüche

1. Vorrichtung zur automatischen Ausrichtung flachgeformter Behälter, mit dem Ziel der durchgehenden Versorgung einer Arbeitsstation wie, zum Beispiel, einer Druckeinheit, welche, im wesentlichen, aus einer Drehscheibe besteht, die mit einer Vielzahl austauschbarer Elemente versehen ist, welche zur Aufnahme von Behältern (6) genau vorbestimmter Abmessungen dienen und welche an ihren beiden Enden Aufnahmen zur Haltung der Behälterhälse aufweisen; ferner besteht die Vorrichtung aus einer feststehenden, gegenüber der Drehscheibe lagenverstellbaren Halteebene, welche eine Öffnung zum Durchlauf der Behälter (6) aufweist; außerdem besteht diese aus einem Schacht (2) zur Aufnahme der Behälter, die durch diesen und ebengenannter Öffnung, durch Einwirkung der Schwerkraft, rutschen und zur Übergabe besagter Behälter einem Förderband (4), welcher die Arbeitsstation versorgt;
dadurch gekennzeichnet, daß die Vertiefungen der austauschbaren Elemente, die zur Aufnahme der Behälter (6) dienen und der Aufnahme- und Übergabeschacht (2), vorgesehen, um ebengenannte Behälter zum Förderband (4) zu führen, Formen und Abmessungen aufweisen, die eine Haltung und Führung der auf ihrer Kante abgestützten Behälter und erlauben und daß das Förderband (4), welches die Behälter (6) am Austritt des Führungsschachtes (2) aufnimmt, in einem ersten Abschnitt Mittel aufweist, welche die Haltung und Förderung besagter Behälter, abgestützt auf deren Kante, in einer leicht geneigten Lage, und das Ablesen vorbestimmter Kennzeichen auf der Oberfläche jedes Behälters erlauben, und in einem zweiten Abschnitt Mittel aufweist, die ein Kippen genannter Behälter auf die eine oder andere Breitseite, das heißt, abgestützt auf einer ihrer Flachseiten, abhängig der Anweisungen, die ein Lesemittel vorbestimmter Kennzeichen gibt, ermöglichen.

2. Vorrichtung nach Anspruch 1, dadurch gekennzeichnet, daß die Haltung und Führung der auf einer Kante abgestützten Behälter mittels Vertiefungen in den austauschbaren Elementen und den Schachtwänden, welche eine Breite aufweisen, die zwischen Höchst- und Mindestabmessungen des Querschnitts der jeweils benutzten Behälter schwankt, ermöglicht wird.

3. Vorrichtung nach Anspruch 1, dadurch gekennzeichnet, daß die Übergabe zum Förderband (4) der auf ihrer Kante abgestüzten Behälter mittels des Führungsschachtes erfolgt, welcher einen kurvenförmigen Boden aufweist, auf dem sich die Behälterkanten abstützen und der stufenweise die Öffnung der feststehenden Ebene des Ausrichters (1) mit obig erwähntem Förderband verbindet.

4. Vorrichtung nach Anspruch 1, dadurch gekennzeichnet, daß die Lesemittel (11) der auf den Behältern vorbestimmten Kennzeichen aus einem photoelektrischen oder photochromischen Abgriff bestehen.

5. Vorrichtung nach Anspruch 1, dadurch gekennzeichnet, daß die Mittel, die sich im ersten Abschnitt des Förderbandes befinden und die eine Haltung und Förderung der in einer leicht geneigten Lage und auf ihrer Kante abgestüzten Behälter ermöglichen, aus zwei gegenüberliegenden Seitenwänden (5), die zu besagtem Förderband gehören, bestehen und die einen Abstand untereinander aufweisen, der zwischen Höchst- und Mindestabmessung des Querschnitts der jeweils benutzten Behälterart schwankt und aus einer unteren Neigstange (7) und einer zweiten oberen Neigstange (8), kraftschlüssig mit der jeweiligen, gegenüberliegenden Seitenwand des Förderbandes, bestehen und welche eine leichte Neigung der Behälter in eine genau vorbestimmte Richtung und Abstützung auf eine der erwähnten Seitenwände ermöglichen.

6. Vorrichtung nach Anspruch 1, dadurch gekennzeichnet, daß die Mittel, die sich im zweiten Abschnitt des Förderbandes befinden und die ein Kippen auf eine oder andere Breitseite, abhängig von den Anweisungen des Lesemittels (11) der vorbestimmten Kennzeichen, ermöglichen, aus zwei gegenüberliegenden Seitenwänden (5) des Förderbandes bestehen, deren Abstand so ausgelegt ist, daß dieser größer als das Höchstmaß des Querschnitts der jeweils benutzten Behälterart ist und aus einem Schieber (12), betätigt durch die Ablesung der vorbestimmten Kennzeichen und in Abhängigkeit der für den jeweiligen Behälter gewünschten Kipprichtung, das heißt:
a) Schieber (12) untätig: Der Behälter kippt durch die Schwerkraft in die Neigungsrichtung, die in im ersten Abschnitt des Förderbandes vorgegeben wurde.
b) Schieber (12) tätig: Der Behälter kippt, durch Einwirkung des Schiebers, in entgegengesetzte Neigungsrichtung des vorgehenden Behälters.

7. Verfahren zur automatischen Ausrichtung flachgeformter Behälter, dadurch gekennzeichnet, daß dieses aus Folgendem besteht:
a) Wiederaufnahme der auf ihrer Kante abgestüzten Behälter, welche anfangs wahllos angeordnet waren;
b) Übergabe dieser Behälter, immer auf deren Kante abgestützt und mit deren Boden in Vorlaufrichtung, einer nach dem anderen an eine untere Aufnahmeebene;
C) Führung dieser Behälter, immer auf deren Kante abgestützt, mit einer leichten Neigung;
d) Ablesung vorbestimmter Kennzeichen auf der Oberfläche jedes Behälters;
e) Abkippen besagter Behälter auf die eine oder ander Breitseite, das heißt, abgestützt auf eine der Flachseiten, in Abhängigkeit der Anweisungen, die aus vorgehender Ablesung entstehen.
f) Durchgehende Übergabe dieser Behälter, abgestützt auf eine der Flachseiten, an eine Arbeitsstation, wie zum Beispiel, eine Druckeinheit.
